# EUROPEAN PATENT APPLICATION

(11) **EP 2 034 431 A1**
(43) Date of publication of application: **11.03.2009**
(21) Application number: 08162608.7
(22) Date of filing: 19.08.2008
(51) Int. Cl.: G06Q 10/00, H04M 1/00

(54) **Mobile communication terminal and schedule managing method therein**

(30) Priority: 07.09.2007 KR 20070091148
(71) Applicant: Samsung Electronics Co., Ltd, Suwon-si, Gyeonggi-do (KR)
(72) Inventor: Kim, Boo Lim c/o Samsung Electronics Co., Ltd, Gyeonggi-do (KR); Kim, Hee Deog c/o Samsung Electronics Co., Ltd, Gyeonggi-do (KR)
(74) Representative: Harrison Goddard Foote

(57) **Abstract**

A mobile communication terminal that enables automatic registration of a schedule using a received text message, and a schedule managing method therein are provided. The method includes determining, upon reception of a text message having a body, whether a date is included in the body of the text message extracting, when at least one date is included in the body of the text message, the included date from the body of the text message and registering a schedule when the extracted date is a schedule execution date and the body of the text message is related to the schedule. Accordingly, convenience for a user can be improved by registering a schedule directly using a received text message without inputting the content of the schedule by the user.

## Description

### BACKGROUND OF THE INVENTION

### 1. Field of the Invention:

The present invention relates to a mobile communication terminal and a schedule managing method therein. More particularly, the present invention relates to a mobile communication terminal that enables automatic registration of a schedule using a received text message, and a schedule managing method therein.

### 2. Description of the Related Art:

Due to developments in terminal manufacturing technologies, terminals may provide a schedule managing function together with a text message transmitting and receiving function. The users of terminals occasionally make appointments, such as meetings, conferences, and parties, with their counterparts using text messages. However, when the users receiving text messages containing appointments desire to register the bodies of the text messages as schedules, it is necessary for them to register the bodies of the text messages separately, and this operation is very inconvenient.

### SUMMARY OF THE INVENTION

An aspect of the present invention is to address at least the above-mentioned problems and/or disadvantages and to provide a mobile communication terminal that registers and manages a received text message as a schedule.

In accordance with an aspect of the present invention, a schedule managing method is provided. The method includes determining, upon reception of a text message having a body, whether a date is included in the body of the text message extracting, when at least one date is included in the body of the text message, the included date from the body of the text message and registering a schedule when the extracted date is a schedule execution date and the body of the text message is related to the schedule.

In accordance with another aspect of the present invention, a mobile communication terminal is provided. The terminal includes a communication unit for receiving a text message having a body, a control unit for, upon reception of a text message, extracting a date included in the body of the text message, and for registering a schedule whose execution date is the extracted date and whose content is the body of the text message, and a storage unit for storing the registered schedule under the control of the control unit.

As mentioned above, an aspect of the present invention is to enable registration and management of a received text message as a schedule.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG. 1 is a block diagram illustrating a communication system according to an exemplary embodiment of the present invention;

FIG. 2 is a block diagram schematically illustrating a mobile communication terminal according to an exemplary embodiment of the present invention;

FIGs. 3A and 3B are a flowchart illustrating a schedule managing method of a mobile communication terminal according to an exemplary embodiment of the present invention;

FIG. 4 is a flowchart illustrating a date extracting process of a mobile communication terminal according to an exemplary embodiment of the present invention; and

FIGs. 5A to 5J are views illustrating examples of user interfaces according to a schedule managing method of a mobile communication terminal according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

A text message of exemplary embodiments the present invention refers to any type of message having a body including letters, and may include a short message, an enhanced message, a multimedia message, a video message and the like.

The term "schedule" in the following exemplary embodiments of the present invention, refers to the content of a schedule referring to the content that is to be transmitted through the schedule and the schedule execution date referring to a date when the content of the schedule is to be executed.

Hereinafter, exemplary embodiments of the present invention are described with reference to the accompanying drawings.

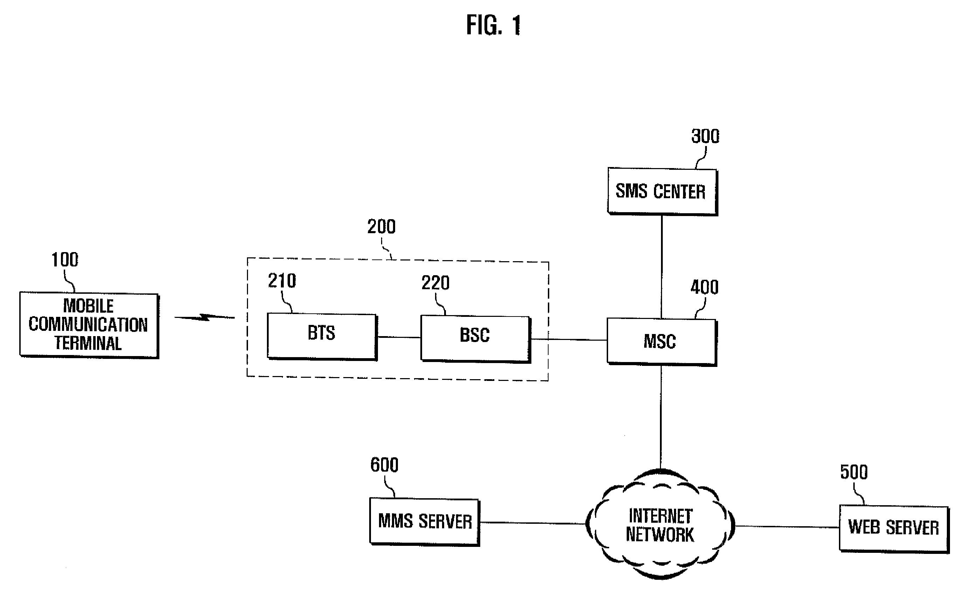

FIG. 1 is a block diagram illustrating a communication system according to an exemplary embodiment of the present invention.

Referring to FIG. 1, the communication system according to the exemplary embodiment of the present invention includes a plurality of mobile communication terminals 100, a base station system 200, a short message service (SMS) center 300, a Mobile Switching Center (MSC) 400, a web server 500, and a Multimedia Message Service (MMS) center 600. While the plurality of mobile communication terminals 100 is illustrated as a single mobile terminal, it is to be understood that the plurality of mobile communication terminals 100 represents and may be referred to hereafter as a mobile communication terminal, a calling terminal, a called terminal, counterpart terminal and the like.

A mobile communication terminal according to an exemplary embodiment of the present invention may include a Personal Digital Assistant (PDA) phone, a cellular phone, a Personal Communication Service (PCS) phone, a Global System for Mobile communication (GSM) phone, a Wideband Code Division Multiple Access (W-CDMA) phone, a CDMA-2000 phone, a Mobile Broadband System (MBS) phone and the like. The MBS phone refers to a mobile phone used in the fourth generation wireless communication system. The mobile communication terminal may set a communication call with a counterpart terminal through a communication network or may set a communication call with a telephone through a telephone network, and may be connected to the web server 500 through the Internet to make an internet service available.

The mobile communication terminal 100 transmits a text message having a body including at least one of letters, numbers, symbols, characters and the like to the counterpart terminal 100, and, upon reception of a text message from the counterpart terminal 100, displays the body of the received text message. The mobile communication terminal 100 transmits a multimedia message including media contents such as image information and the like together with the body, and, upon reception of a multimedia message from the counterpart terminal 100 through the MMS server 600, displays the body and media contents of the received multimedia message. In addition, when the body of a short message or a multimedia message that is received from the counterpart terminal includes a date, the mobile communication terminal 100 registers the body of the text message as a schedule.

The base station system 200 includes a Base Transceiver Station (BTS) 210 wirelessly connected to the mobile communication terminal 100 and a Base Station Controller (BSC) 220 controlling the BTS 210 while exchanging messages between the BTS 210 and the MSC 400. The base station system performs a handoff function and a wireless support managing function, guaranteeing the mobility of the mobile communication terminal 100, and may support both synchronous and asynchronous systems.

Upon reception of a demand signal for communication from the terminal through a traffic channel, the BTS 210 transmits the received demand signal to the BSC 220. The BTS 210 is a network endpoint system directly and wirelessly connected to the terminal to implement processing of a base bandwidth signal, conversion of a wire or wireless signal, and transmission and reception of a wireless signal.

The BSC 220 controls the BTS 210, and implements allocation and release of a wireless channel to and from the terminal 100, control of a transmission output between the terminal 100 and the BTS 210, determination of soft and hard handoffs between service cells, transcoding and vocoding, distribution of Global Positioning System (GPS) clocks, management and maintenance of the BTS 210 and the like. Upon reception of a demand signal for communication from the base station, the BSC 220 transmits the received demand signal to the MSC 400.

The MSC 400 implements processing of basic and additional services, processing of a received and transmitted call of a subscriber, processing of a location registering procedure and a handoff procedure, and association with another network. The MSC 400 of an exemplary IS-95 A/B/C system includes subsystems such as an Access Switching Subsystem (ASS) processing distributed calls, an Interconnection Network Subsystem (INS) processing centralized calls, a Central Control Subsystem (CCS) concentrating management and maintenance, Location Registration Subsystem (LRS) storing and managing information of subscribers and the like. The MSC 400 for the third and fourth generations may include an Asynchronous Transfer Mode (ATM) switch (not shown). The ATM switch improves efficiency in transmission speed and use of wires by transmitting packets in units of cells.

Upon reception of a text message from the mobile communication terminal 100, the BTS 210 transmits the text message to the MSC 400 through the BSC 220. The MSC transmits the text message to the SMS center 300. Upon reception of a text message processed by the SMS center 300, the MSC transmits the text message to the counterpart terminal 100. In other words, the SMS center 300 transmits the received text message to the called terminal 100 and imposes a charge for use of the text message service on at least one of the calling terminal 100 and the called terminal 100.

The MMS server 600 stores a multimedia message received from the mobile communication terminal 100, and, when demand for reception of the multimedia message is made by the called terminal 100, transmits the multimedia message. In other words, upon reception of a multimedia message including media contents from the calling terminal 100, the MMS server 600 transmits URL information, where the media contents of the multimedia message are stored, to the called terminal 100 in order to allow the called terminal 100 to receive the media contents of the multimedia message. In this case, when the MMS server 600 receives telephone information for discerning information necessary for describing the media contents to the called terminal receiving the multimedia message, together with the multimedia message, it notifies of the reception of the message to the called terminal 100 and transmits the multimedia message stored according to the request of the called subscriber to the counterpart terminal 100.

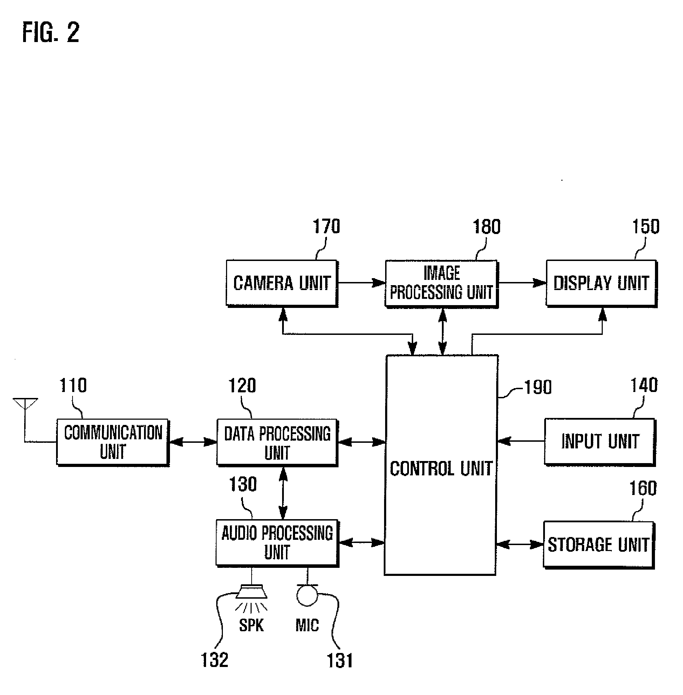

FIG. 2 is a block diagram schematically illustrating a mobile communication terminal according to an exemplary embodiment of the present invention.

Referring to FIG. 2, the mobile communication terminal 100 includes a communication unit 110, a data processing unit 120, an audio processing unit 130, an input unit 140, a display unit 150, a storage unit 160, a camera module 170, an image processing unit 180, and a control unit 190.

The communication unit 110 includes a Radio Frequency (RF) transmitter for up-converting the frequency and amplifying a transmitted signal and an RF receiver for low-noise amplifying and down-converting the frequency of a received signal. The communication unit is wirelessly connected to the BTS 210 of the base station system 200 to receive a text message from the counterpart terminal 100 through the BTS 210.

The data processing unit 120 includes a transmitter for encoding and modulating a received signal and a receiver for demodulating and decoding a received signal. In other words, the data processing unit 120 may include a modem and codecs. The codecs may include a data codec for processing packet data and an audio codec for processing an audio signal such as a voice. Accordingly, the data processing unit 120 decodes the image signal and the voice signal that are received from the counterpart terminal 100 using the codecs.

The audio processing unit 130 reproduces a voice signal output from the audio codec of the data processing unit 120 through a speaker 132 or transmits a voice signal generated by a microphone 131 to the audio codec of the data processing unit 120. The audio processing unit 130 may output a voice signal of a video message through the speaker 132. In particular, the audio processing unit 130 may output an alarm at a notification time of a pre-registered schedule through the speaker 132.

The input unit 140 may include a keypad, a touch screen or a touch pad. The input unit transmits an input signal to the control unit 190 to control the operations of the mobile communication terminal 100. In particular, the input unit 140 receives key signals for setting of a schedule execution date, the content of the schedule, and a notification time and transmits the key signals to the control unit 190.

The display unit may include a Liquid Crystal Display (LCD), and displays various display data generated in the mobile communication terminal 100 and the operational states of the mobile communication terminal 100 on a screen. The display unit 150 may be operated as an input unit when being realized with a touch screen. In particular, the display unit 150 according to an exemplary embodiment of the present invention displays the body of a received text message, a schedule editing screen, a notification time setting screen and the like. The display unit 150 may display the content of a schedule at a set notification time.

The storage unit 160 may include a program memory used for the overall operations of the mobile communication terminal 100 and data memories. The program memory may store programs for controlling the general operations of the mobile communication terminal 100 and programs for registering the body of a received text message as a schedule according to an exemplary embodiment of the present invention. The data memory temporarily stores data generated during execution of the programs. In particular, the storage unit 160 stores a received text message, calendar data, a schedule and the like.

The camera module 170 includes a camera sensor for photographing an image and for converting an optical signal obtained by photographing the image into an electrical signal and a signal processor for converting an analog image photographed by the camera sensor into digital signals. In this case, the camera sensor may be a Charge-Coupled Device sensor (CCD) and the like, and the signal processor may be realized with a Digital Signal Processor (DSP) and the like.

The image processing unit 180 creates image frames for displaying an image output from the camera module 170. The image processing unit 180 processes the image output from the camera module 170 in units of frames, and outputs a frame image in correspondence with the characteristics and size of the display unit 150. The image processing unit 180 includes an image codec, and compresses a frame image displayed on the display unit 150 in a preset way or restores a compressed frame image into the original frame image. Here, the image codec may include at least one of a JPEG codec, an MPEG4 codec, a Wavelet codec and the like.

The control unit 190 controls the overall operations of the mobile communication terminal 100. In particular, the control unit 190 extracts a date included in the body of a received text message, stores the extracted date as a schedule execution date, and stores the body as the content of the schedule. The control unit 190 extracts a current date when a date is not included in the body of the received text message.

When one date is included in the body of the text message, the control unit 190 extracts the date. On the other hand, when at least two dates are included in the body of the text, the control unit 190 extracts the first date. When the extracted date does not exist in calendar data of the storage unit, the control unit 190 determines a current date.

The control unit sets a notification date for outputting the content of the schedule, and edits (adds and/or corrects) a schedule execution date and the content of the schedule.

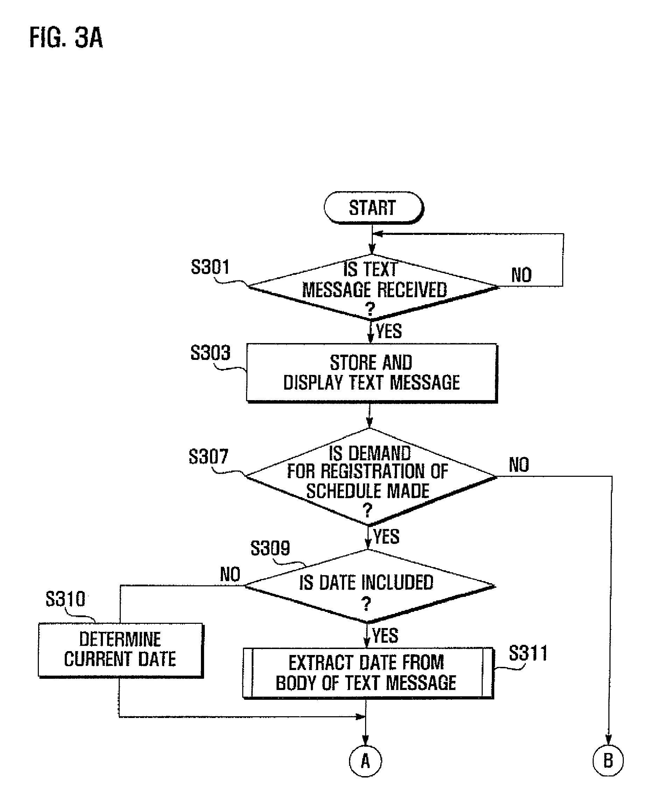

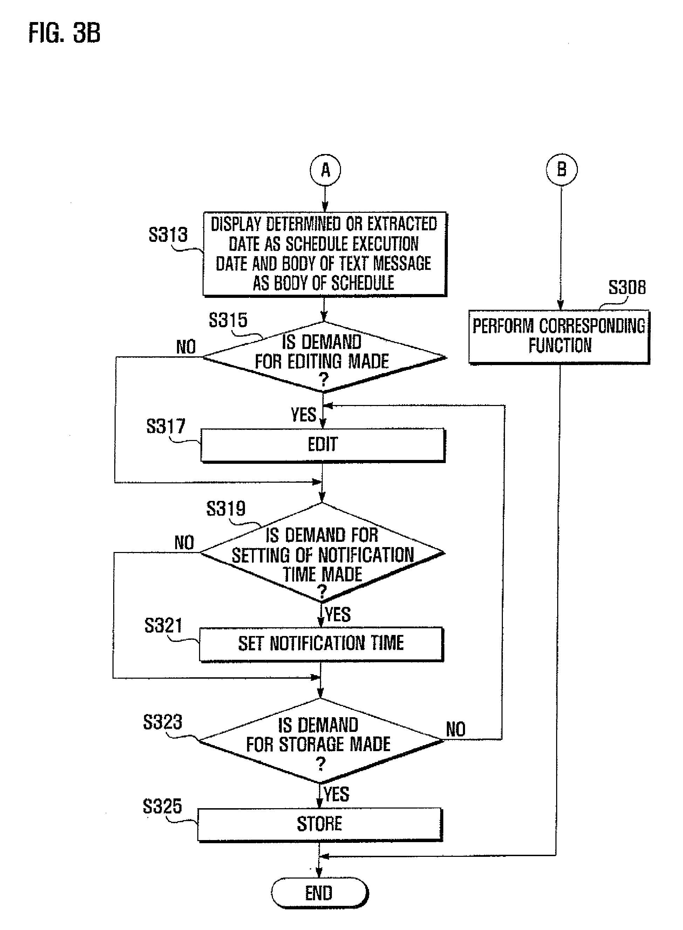

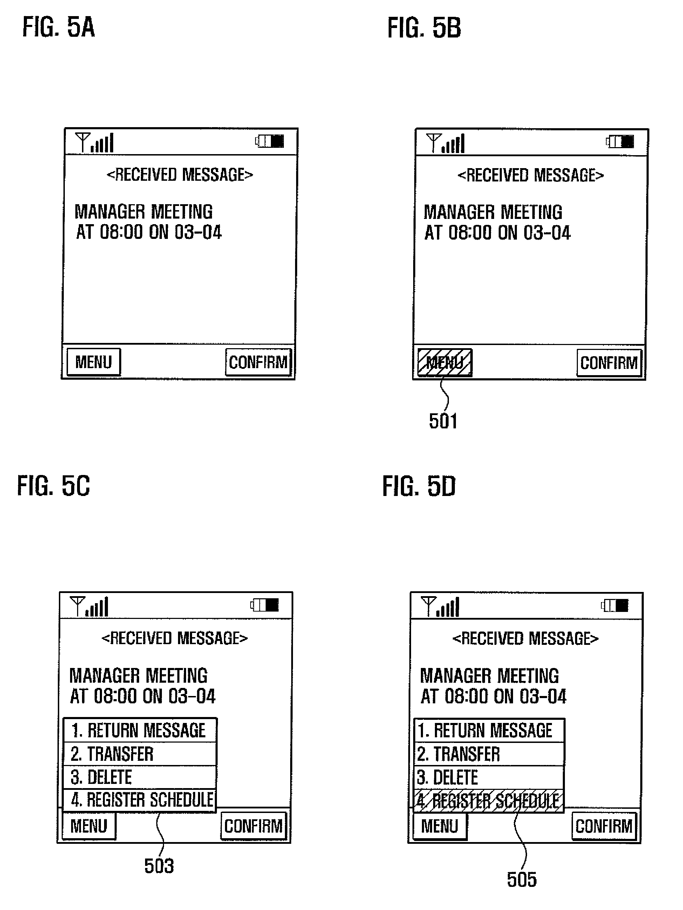

FIGs. 3A and 3B are a flowchart illustrating a schedule managing method of a mobile communication terminal according to an exemplary embodiment of the present invention. FIGs. 5A to 5J are views illustrating examples of user interfaces according to a schedule managing method of a mobile communication terminal according to an exemplary embodiment of the present invention.

Referring to FIGs. 3A and 3B, reception of a text message is detected by the control unit 190 in step S301. The received text message is then stored in the storage unit 160, and, as illustrated in FIG. 5A, displayed on the display unit in step S303. Upon demand for registration of a schedule from a text message, the control unit 190 detects the demand in step S307 and determines whether a date (at least one of a month, day and year) is included in the body of the text message by parsing the body of the text message in step S309. For example, when a menu key 501 is selected when the text message is being displayed, as illustrated in FIG. 5B, the control unit 190 displays menu 503 for performing various functions as illustrated in FIG. 5C. When "REGISTER SCHEDULE" is selected in the menu as illustrated in FIG. 5D, the control unit 190 may determine whether a date is included in the body of the text message. In this case, although an example of selecting the menu of 'REGISTER SCHEDULE' in a tree structure using the menu key has been described, the present invention is not limited thereto. In other words, the mobile communication terminal may include a separate schedule registering soft key, and the control unit 190 may select the menu of 'REGISTER SCHEDULE' when the 'REGISTER SCHEDULE' key is selected.

Then, the control unit 190 recognizes the number located in front of a character such as a slash (/) or a hyphen (-) in the body of the text message as a month, and the number located after the character, as a day. For example, March 4 may be expressed as '03-04' or '03/04'. In other words, the control unit 190 may recognize 3 as a month, and 4 as a day.

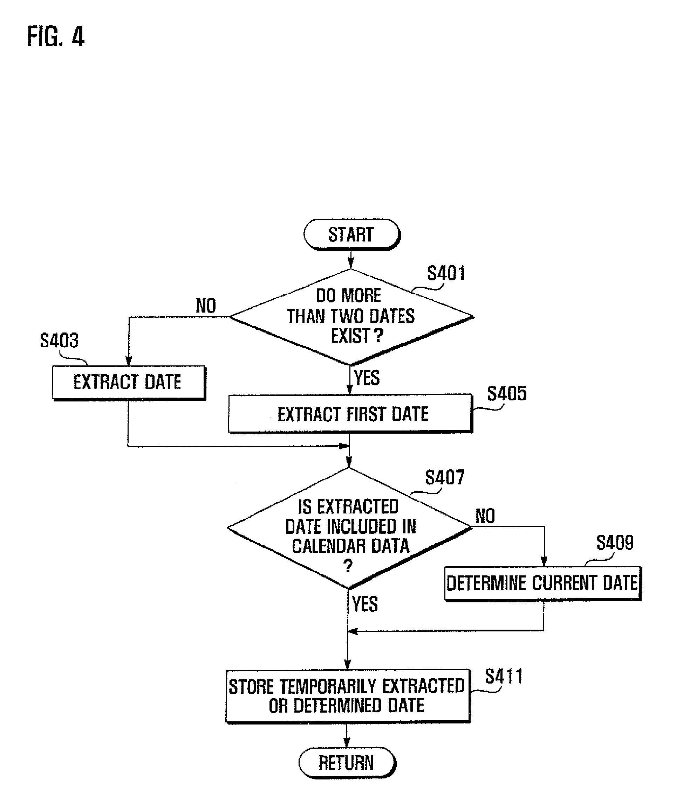

After the determination in step S309, when a date does not exists in the body of the text message, the control unit 190 determines a current date in step S310. Otherwise, the control unit 190 extracts the date included in the body of the text message in step S311. The date extracting process of step S311 will be described in more detail below with reference to FIG. 4.

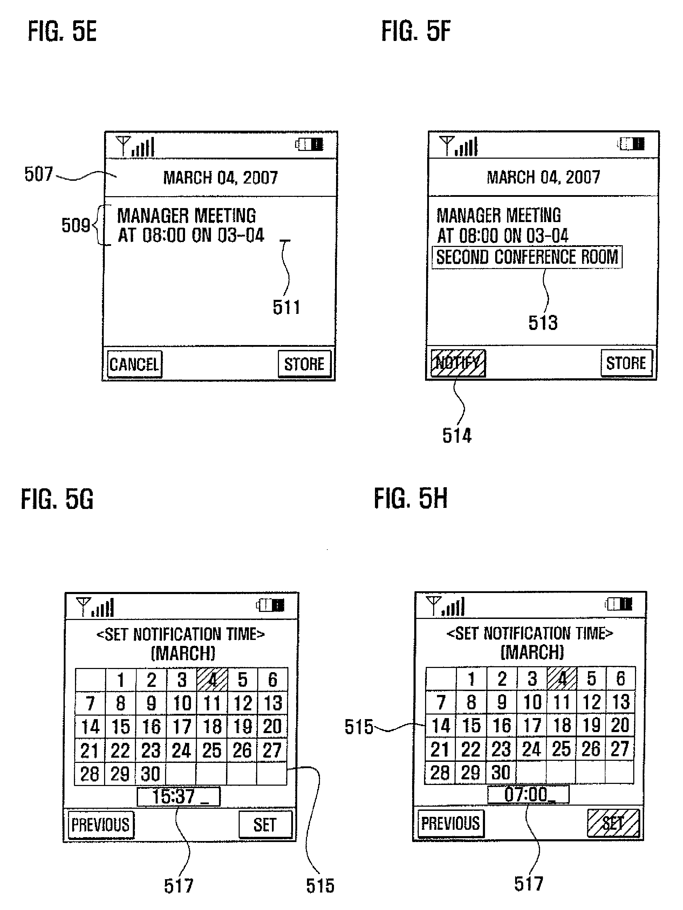

Thereafter, the control unit 190 displays the determined or extracted date on the display unit 150 as a schedule execution date 507 as illustrated in FIG. 5E, and the body of the text message is displayed on the display unit 150 as the content 509 of the schedule in step S313. Then, the control unit 190 creates a cursor 511 to edit (add and/or correct) the schedule execution date 507 and the content 509 of the schedule to additionally display the edited contents. When a demand for editing (addition and/or correction) the schedule execution date and the content of the schedule is made, the control unit 190 detects the demand in step S315, and edits the schedule execution date 507 and the content 509 of the schedule in response to key signals in step S317. For example, the control unit 190 may correct the schedule execution date 507 from 'March 04, 2007' to 'March 03, 2007'. Further, the control unit 190 may add 'second meeting room' 513 to the content of the schedule as illustrated in FIG. 5F.

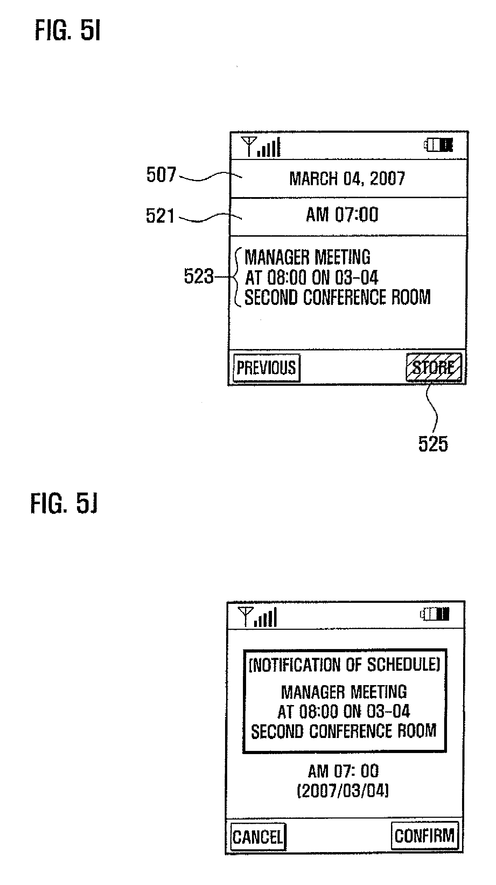

Meanwhile, when a demand, not for editing, but for setting of a notification time is made, the control unit 190 detects this in step S319, and sets the notification time in response to a key signal in step S321. In this case, the notification time is a time for notifying the schedule. The demand for setting of the notification time may be made through a notification key 514 as illustrated in FIG. 5F. In other words, as illustrated in FIG. 5G, the control unit 190 may display the notification time on a screen for setting the notification time, display it in a notification time input window 517, and highlight the notification execution date in a calendar 515. In this case, the control unit 190 may correct the notification execution time highlighted in the calendar data. The control unit 190 may display a cursor to display a current time as an initial value in the notification time input window 517 and correct the displayed current time. When the notification time has been set as illustrated in FIG. 5H, the control unit 190, as illustrated in FIG. 5I, displays the schedule execution date 507, the notification time 521, and the content 523 of the schedule on the display unit 150.

Finally, when storage of the schedule execution date, the notification time, and demand for the content of the schedule is made, the control unit detects this in step S323 and stores the schedule in the storage unit 160 in step S325. Then, the demand for the storage may be made through a storage key 525 as illustrated in FIG. 5I.

After the determination of step S307, when there is no demand for registration of a schedule, the control unit 190 performs a corresponding function in step S308. The corresponding function includes any of the return of, transfer of, deletion of, and storage of the number of the text message displayed in step S303.

Upon setting of the notification time, the control unit 190 counts a current time, and outputs alarm and voice signals at the set notification time and, at the same time, displays the content of the schedule stored in the storage unit 160 on the display unit 150 as illustrated in FIG. 5J. Then, the control unit 190 may implement notification using at least one combination method of a bell sound, vibration, a lamp and the like. Although an exemplary embodiment of displaying the content of a schedule on the display unit 150 has been described as an example, it is noted, as an example, that the content of a schedule may be output as a voice or sound through a speaker.

FIG. 4 is a flowchart illustrating a date extracting process of a mobile communication terminal according to an exemplary embodiment of the present invention.

Referring to FIG. 4, the control unit 190 determines whether at least two dates exist in the body of a received text message in step S401. In the case of there being at least two dates, the control unit 190 extracts the first date, in terms of location, in step S405. For example, assuming that a text message contains 'Let's meet on 03-04. It's not 03-03 but 03-04', the month is '3' but the day may be '3' or '4'. Then, the control unit 190 extracts '3' as the month and '4' as the day. When a year is included in the body of a text message, the control unit 190 extracts the included year. Otherwise, the control unit 190 extracts a current year. Although an example of extracting a first date has been described, an exemplary embodiment of the present invention also includes an exemplary embodiment of selecting a second date or a date included in the body of a text message according to a setting by the user.

On the other hand, when fewer than two dates are determined to exist in the body of a text message, the control unit 190 extracts the one date in step S403. The control unit 190 determines whether the extracted date is included in calendar data stored in the storage unit 160 in step S407. This is a type of procedure for checking the existence of an error of the extracted date. For example, January, March, May, July, August, October, and December have 31 days, April, June, September, and November have 30 days, and February has 28 days. Further, February of a leap year, such as the years of 2008, 2012, and 2016, have 29 days. However, assuming that the extracted date is '03-37', since there is no '03-37' in the calendar data, it cannot be registered as a schedule execution date. In other words, the control unit 190 determines whether '03-37' is included in the calendar data to determine if '03-37' is erroneous data. When determining that the extracted date is not contained in the calendar data, that is, the extracted data is an erroneous date, the control unit 190 determines a current date in step S409. Thereafter, the control unit 190 temporarily stores the extracted or determined date in the storage unit 160 in step S411. Then, the control unit 190 returns to FIG. 3.

Although only examples related to a text message have been described in detail in the above description of exemplary embodiments of the present invention, it should be understood by those skilled in the art that an exemplary embodiment of receiving a video message and carrying out management of a schedule may be possible using the same method.

Certain aspects of the present invention can also be embodied as computer readable code on a computer readable recording medium. A computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While the present invention has been described with reference to certain exemplary embodiments thereof, it will be understood by those skilled in the art that various changes in form and details may be made therein without departing from the spirit and scope of the present invention as defined by the appended claims and their equivalents.

## Claims

1. A schedule managing method, the method comprising:
determining, upon reception of a text message having a body, whether a date is included in the body of the text message;
extracting, when at least one date is included in the body of the text message, the included date from the body of the text message; and
registering a schedule when the extracted date is a schedule execution date and the body of the text message is related to the schedule.

2. The method of claim 1, further comprising determining a current date when no date is included in the body of the text message.

3. The method of claim 1 or 2, wherein the extracting of the included date comprises:
when one date is included in the body of the text message, the included date is extracted; and
when more than two dates are included in the body of the text message, a first date is extracted from the body of the text message.

4. The method of one of claims 1 to 3, further comprising:
determining whether the extracted date is included in pre-stored calendar data; and
determining, when the extracted date is not included in pre-stored calendar data, a current date.

5. The method of one of claims 1 to 4, wherein the registering of the schedule comprises setting a notification time for outputting the content of the schedule.

6. The method of one of claims 1 to 5, wherein the registering of the schedule comprises implementing at least one of a correction and an addition of at least one of the schedule execution date and the content of the schedule.

7. The method of one of claims 1 to 6, wherein the text message comprises one of a short message, an enhanced message, and a multimedia message.

8. A mobile communication terminal, the terminal comprising:
a communication unit for receiving a text message having a body;
a control unit for, upon reception of a text message, extracting a date included in the body of the text message, and for registering a schedule whose execution date is the extracted date and whose content is the body of the text message; and
a storage unit for storing the registered schedule under the control of the control unit.

9. The terminal of claim 8, wherein, when no date is included in the body of the text message, the control unit determines a current date.

10. The terminal of claim 8 or 9, wherein, when one date is included in the body of the text message, the control unit extracts the included date, and when more than two dates are included in the body of the text message, the control unit extracts a first date from the body of the text message.

11. The terminal of one of claims 8 to 10, wherein the storage unit stores calendar data and, when the extracted date is not included in the calendar data, the control unit determines a current date.

12. The terminal of one of claims 8 to 11, wherein the control unit sets a notification time for output of the content of the schedule during registration of the schedule.

13. The terminal of one of claims 8 to 12, wherein the control unit implements at least one of correction and addition of at least one of the schedule execution date and the content of the schedule.

14. The terminal of one of claims 8 to 13, wherein the text message comprises one of a short message, an enhanced message, and a multimedia message.
